# EUROPEAN PATENT SPECIFICATION

(11) **EP 2 445 266 B1**
(45) Date of publication and mention of the grant of the patent: **16.03.2016**
(21) Application number: 10290576.7
(22) Date of filing: 25.10.2010
(51) Int. Cl.: H04W 40/12

(54) **Control of access network/access technology selection for the routing of IP traffic by a user equipment, and QoS support, in a multi-access communication system**
Steuerung der Zugangsnetzwerk-/Zugangstechnologieauswahl zum Routen eines IP-Verkehrs durch ein Benutzergerät sowie QoS-Unterstützung in einem Kommunikationssystem mit Mehrfachzugriff
Contrôle de sélection de technologie d'accès/réseau d'accès pour le routage d'un trafic IP par un équipement d'utilisateur, et support QoS, dans un système de communication à accès multiple

(43) Date of publication of application: 25.04.2012
(73) Proprietor: ALCATEL LUCENT, 92100 Boulogne-Billancourt (FR)
(72) Inventor: Landais, Bruno, 22304 Lannion (FR); Thiebaut, Laurent, 91620 Nozay (FR); Casati, Alessio, Westlea Swindon, WI SN5 7DJ (GB)
(74) Representative: El Manouni, Josiane

(56) References cited:
- WO-A1-2009/091295
- WO-A1-2010/080966
- WO-A1-2010/098146
- "3rd Generation Partnership Project; Technical Specification Group Core Network and Terminals; Access to the 3GPP Evolved Packet Core (EPC) via non-3GPP access networks; Stage 3 (Release 10)", 3GPP STANDARD; 3GPP TS 24.302, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 27 September 2010 (2010-09-27), pages 1-55, XP050442229, [retrieved on 2010-09-27]
- "Universal Mobile Telecommunications System (UMTS); LTE; Architecture enhancements for non-3GPP accesses (3GPP TS 23.402 version 8.9.0 Release 8)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 2, no. V8.9.0, 1 June 2010 (2010-06-01), XP014047192,

## Description

The present invention generally relates to communication networks and systems.

Descriptions of communication networks and systems can be found in the literature, such as in particular in Technical Specifications published by standardisation bodies such as for example 3GPP (3^{rd} Generation Partnership Project).

In a communication system, terminals such as User Equipement UE have access to communication services (such as in particular IP-based services) provided by a Core Network via Access Networks/Access Technologies. There may be different types of Access Networks/Access Technologies.

An example of communication system is Evolved Packet System EPS, a description of which can be found in particular in 3GPP TS 23.401 and 3GPP TS 23.402. A system such as EPS includes Evolved Packet Core EPC that can be accessed by Access Networks including 3GPP access networks (such as GERAN, UTRAN, HSPA, E-UTRAN) and non-3GPP Access Networks (such as WiFi, WiMAX, ...etc.). Another example of communication system is 3G-WLAN Interworking, a description of which can be found in particular in 3GPP TS 23.060 and 3GPP TS 23.234. A system such as 3G-WLAN Interworking includes 3G/UMTS Packet Core that can be accessed by 3GPP/3G/UMTS Access Networks (such as GERAN, UTRAN, HSPA) and non-3GPP/WLAN Access Network. There are of course other examples of communication systems, including systems specified by standardization bodies other than 3GPP.

IP-based communication services include providing IP connectivity, referred to as PDN connectivity service, between an UE and an external Packet Data Network PDN. Examples of PDNs include public Internet, Intranet, operator's IMS network...etc. The PDN connectivity service supports the transport of IP traffic flow aggregate(s) comprising one or more IP flows also called Service Data Flows SDFs.

Documents WO 2010/080966 A1 and WO 2010/098146 A1 provide technological background.

Such systems have recently been enhanced to enable User Equipments to route different IP flows to the same PDN connection through different access networks/access technologies and to allow the operator to influence the access network/access technology through which a specific IP flow should be routed. Such functionality is also called Inter System Routing within frameworks called IP Flow Mobility IFOM (a description of which can be found for example in 3GPP TS 23.261) and Access Network Discovery and Selection Function ANDSF (a description of which can be found for example in 3GPP TS 23.402 and 3GPP TS 24.312).

There is a need to improve such Inter System Routing functionality in such systems. There is also a need to improve QoS support in such systems. More generally there is a need to improve communication services in such systems.

Embodiments of the present invention in particular address such needs.

These and other objects are achieved, in one aspect, in an embodiment of the present invention, by a method for the control of access network/access technology selection for the routing of IP traffic by a User Equipment UE in a multi-access communication system, based on operator's policies, wherein:
- said operator's policies include Quality of Service QoS-based policies, based on IP traffic matching specific QoS filters.

These and other objects are achieved, in one aspect, in an embodiment of the present invention, by a method for QoS support in a multi-access communication system comprising 3GPP and non-3GPP access networks/access technologies, said method comprising:
- notification of a User Equipment UE that does not require establishment or modification of a bearer over a 3GPP access network/access technology for a Service Data Flow SDF, of the QoS associated with said SDF, assigned by a 3GPP Core Network.

These and other objects are achieved, in other aspects, by entities for performing such method(s), said entities including User Equipment UE, and network entities in turn including entities such as policy server (such as in particular PCRF (defined in 3GPP TS 23.203) and ANDSF Server), and entities in charge of signaling in the control plane.

Some embodiments of apparatus and/or methods in accordance with embodiments of the present invention are now described, by way of example only, and with reference to the accompanying drawings, in which:
- Figure 1 is intended to illustrate signaling in a multi-access communication system, for the control of access network/access technology selection for the routing of IP traffic by a User Equipment, according to a possible solution having certain drawbacks that embodiments of the present invention enable to avoid,
- Figure 2 is intended to illustrate signaling in a multi-access communication system, for the control of access network/access technology selection for the routing of IP traffic by a User Equipment, according to embodiments of the present invention,
- Figure 3 is intended to illustrate control of access network/access technology selection for the routing of IP traffic by a User Equipment, according to embodiments of the present invention.

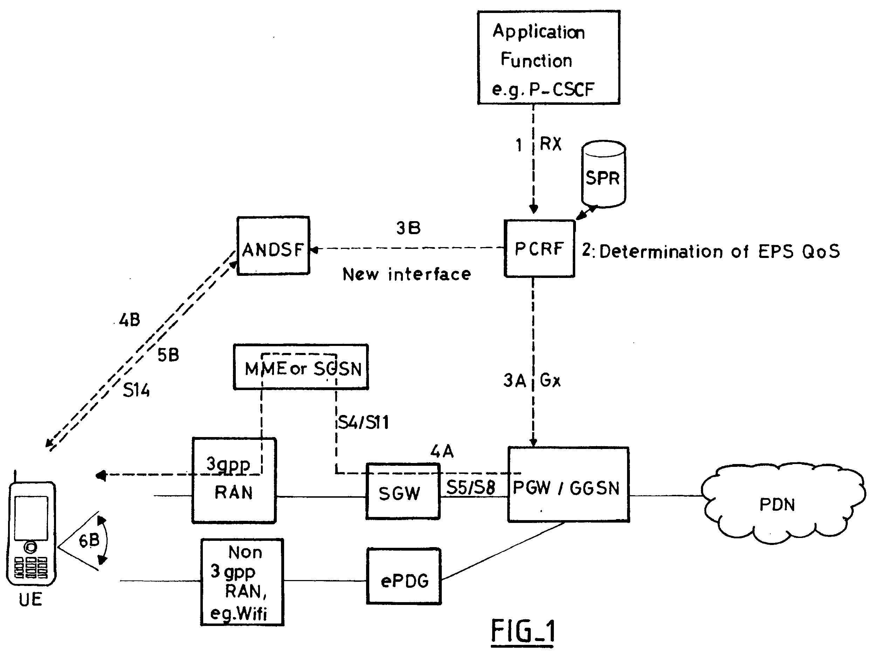

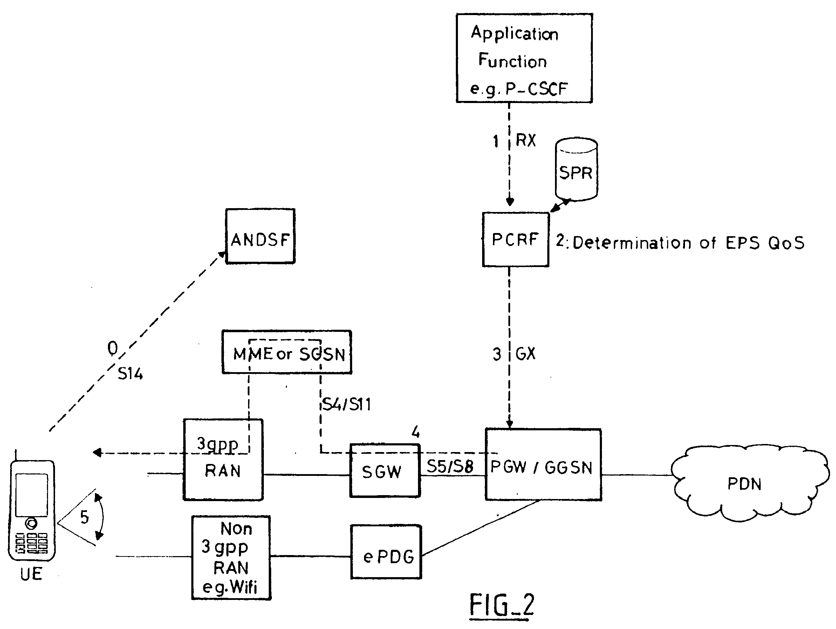

An example of communication system illustrated in figures 1 and 2 corresponds to above-recalled EPS or 3G-WLAN Interworking, including, in the illustrated example:
- User Equipment UE,
- 3GPP Radio Access Network RAN,
- Non-3GPP Radio Access Network RAN, e.g. Wifi,
- Evolved Packet Core EPC (in turn including PDN Gateway PGW, Serving Gateway SGW, Mobility Management Entity MME or S4-Serving GPRS Support Node SGSN), Evolved Packet Data Gateway ePDG),
- 3G/UMTS Packet Core (in turn including Gateway GPRS Support Node GGSN, Serving GPRS Support Node SGSN, Packet Data Gateway PDG),
- higher level fundional entities including: Policy and Charging Rules Function PCRF, Subscription Profile Repository SPR, Access Network Discovery and Selection Function ANDSF, and Application Function e.g. Proxy-Call Session Control Function P-CSCF.

Embodiments of the present invention apply to UEs that support multiple RAT (Radio Access Technologies) such as a 3gpp radio (GSM, UMTS, LTE) AND a non 3gpp radio such as WLAN radio (Wifi per 802.11 defined by IEEE).

Embodiments of the present invention enable to simplify the configuration on UE of rules that control which Radio Access Technology or/and which Radio Access Network the UE uses to send Service Data Flows.

Embodiments of the present invention enable to allow a UE to dynamically select an operator preferred RAT or/and operator preferred RAN based on the QoS associated to the IP Flow.

With current (3gpp) definition of ISRP (Inter System Routing Policies - 3GPP TS 23.402), the operator is only able to set policies based on APN (Access Point names such as defined in 3GPP TS 23.060 and TS 23.401) and/or the IP filters:
"One or more Filter Rules, each one identifying a prioritized list of access technologies / access networks which shall be used by the UE when available to route traffic that matches specific IP filters and/or specific APNs. A filter rule also identifies which radio accesses are restricted for traffic that matches specific IP filters and/or specific APNs (e.g. WLAN is not allowed for traffic to APN-x)".

Even though the possibility to define ISRP at the granularity of an IP flow (or of a set of IP flows when wildcarding is being used) is a MUST, with current definition of ISRP, it is not possible for the operator to set coarser grain ISRP rules associated with the QoS required for a flow, e.g. rules associated with the QCI (QoS Class Index defined in 3GPP TS 23.203) used for a SDF (Service Data Flow).

One of main potential use of IP-flow related policies to be sent by the ANDSF (Access Network Discovery and Selection Function as defined in 3GPP TS 23.402 § 4.8.2) to an UE is to allow an operator to set ISRP (Inter-System Routing Policies) based on the QoS associated to applications, e.g. to select the RAT to be used to carry an IP flow depending on whether the application using this IP flow requires a guaranteed bit rate bearer or not, priority, or specific packet delay budget, packet error loss rate, etc..., and this regardless of the IP address and port ranges used for a flow. An example of usage of this kind of rule is to keep IP flows associated with conversational voice calls on the 3gpp radio while offloading web browsing related traffic onto other RAT (s) such as WLAN (Wireless Local Area Network).

One may wonder why providing IP flows in ISRP rules configured on the UE by the ANDSF would not allow to fulfil the requirement e.g. to keep IP flows associated with voice calls on the 3gpp radio.

One problem is that the IP characteristics (IP address, port number) of an IP flow associated with a voice call cannot be known in advance (before this call is set-up).

A possible solution for solving such problem is illustrated in figure 1. Figure 1 is intended to illustrate signalling in a multi-access communication system, for the control of access network/access technology selection for the routing of IP traffic by a User Equipment, according to said possible solution.

This solution would require the ANDSF to be notified dynamically of the characteristics (IP address, port number) of an IP flow associated with a given service (e.g. voice call) and to dynamically update the UE with the associated ISRP rule.

This would make the ANDSF part of the dynamical EPS (Evolved Packet Sub-system as defined in 3GPP TS 23.002/23.401) control plane flow associated with the establishment / release of the service.
After an Application (e.g. P-CSCF, Proxy CSCF for IMS (IP Multimedia Service) as defined in 3GPP TS 23.228) has notified the PCRF (Policy and Charging Rules Function defined in 3GPP TS 23.203) over Rx (interface between an application and the PCRF defined in 3GPP TS 29.214) of a service (e.g. voice call) start/stop (together with the media description of this service) and the PCRF has taken appropriate policy decisions, this would imply 2 parallel real time signalling flows
   o A signalling flow to establish the dedicated bearer: Gx/S9 signalling to the PCEF/ BBERF (Policy-Charging-Enforcement Function / as defined in 3GPP TS 23.203) as well as signalling associated with the activation / deactivation /modification of a dedicated bearer over the PDN connection
      AND
   o As the IP characteristics (IP address, port number) of an IP flow associated with a voice call cannot be known in advance for all service deployments and pre-configured in the UE even with usage of wild-carding for IP flow, a new signalling flow from the PCRF to the UE via the ANDSF to update the IP flow related ISRP in order to take into account the new service flow that is to start / stop. Such dynamic signalling flow would use the S14 interface between the UE and the ANDSF and thus use OMA DM (Open Mobile Alliance -Device Management). Deploying such possible solution would require to cross-check whether the OMA DM protocol is suitable for such real time signalling flow associated with e.g. the set-up of a call, and would require to standardize a new interface between the PCRF and the ANDSF.

Following steps may be provided in the solution illustrated in figure 1.

### Initial situation:

The initial situation is of the UE camping over both a 3gpp/3gpp2 RAN (WBCDMA, LTE,...) and over a non 3gpp/3gpp2 RAN (e.g. Wifi) or camping only over a 3gpp/3gpp2 RAN. The PCRF has already been notified per IFOM procedure (IFOM IP Flow Mobility being defined in 3GPP TS 23.261) of the initial IFOM related mobility rules of the UE (the notification goes from UE to PCEF via network procedure defined in 3GPP TS 23.261 and from PCEF to PCRF via IP Flow Mobility rule Notification defined in 3GPP TS 29.212).
∘ 1. An Application has started on the UE and an Application Function (AF) of the Application environment (e.g. P-CSCF, Proxy CSCF for IMS) notifies the PCRF (Policy and Charging Rules Function) over Rx (interface between an application and the PCRF) of a service (e.g. voice call or video service) start together with the media description of this service. This media description contains the (IP, port) addressing information of the IP flows associated with the service (Service Data Flow information).
∘ 2. The PCRF takes appropriate policy decisions, based on information received over Rx and possibly on information about the UE point of attachment to the EPC (roaming condition, UE currently connected over a 3gpp radio and/or over Wifi,...) and/or and/or on subscription related information retrieved from the SPR (user policy subscription related database).

This decision may correspond to 2 cases:
a. Case α: a mobile IP-CAN (IP Connectivity Access network) bearer is to be created or modified (e.g. over the 3gpp/3gpp2 RAN) in order to carry the Service Data Flow.
   Such bearer may correspond to a dedicated bearer of a PDN connection or to a secondary PDP context.
b. Case β: no such mobile IP-CAN (IP Connectivity Access network) bearer is to be created or modified as e.g. the flow is to be carried over Wifi

The determination of which Case (α or β) applies is made as follows:
The PCRF shall check if the new service data flow information matches any of the routing rule information [reported beforehand by the PCEF in the IP flow mobility routing rule sent over Gx]. If they match, the PCRF determines where the bearer binding for a service data flow is located [i.e. determines whether the flow is to be carried over 3gpp or Wifi, thus whether Case α or β applies].

Note that later on, radio conditions may make the UE decide to change of RAT to carry the Service Data Flow (e.g. use 3gpp radio instead of using Wifi). In that case the PCRF is notified per IFOM procedure of this decision (notification from UE to PCEF via network procedure defined in 23.261 and IP Flow Mobility rule modification from PCEF to PCRF defined in 3gpp 29.212). When this applies, the PCRF may then need to switch between Case β and Case α

Steps 1 and 2 correspond to signalling and procedures already documented in 3GPP

This implies 2 parallel real time signalling flows (depicted with letters A and B)

Flows A corresponding to existing signalling
∘ 3A. Gx/S9 signalling to the PCEF/ BBERF (Policy-Charging-Enforcement Function / as defined in 3GPP TS 23.203) to download the associated QoS and charging policies to the PGW/GGSN.
∘ 4A. Signalling within the EPC (involving PGW/GGSN, SGW, SGSN or MME) and with the UE. This signalling aims at the activation / modification of a dedicated bearer to support the service within a PDN connection (PDP context for legacy GPRS). This signalling contains the association between (IP, port) addressing information of the IP flows associated with the service AND the dedicated bearer (together with EPS QoS parameters of this bearer)

Step 4A is only needed in Case α:
Flows B
   ∘ 3B. New signalling flow from the PCRF to the ANDSF to update the IP flow related ISRP in order to take into account the new service flow that is to start / stop.
   ∘ 4B. As the UE related policies have changed the ANDSF triggers an OMA DM (S14) push that is likely to rely on sending an SMS to the UE in order to trigger the ANDSF client on the UE to fetch the new ISRP policies (associated with the IP address used by the application that has started)
   ∘ 5B. The UE client fetches the new ISRP policies

Steps 3B and 4B are likely to take time as those steps use non real time communication paths
∘ 6B. Based on the new IP address based ISRP rules received in 5B., the UE takes appropriate decision on which RAT to choose to support the service flow

Figure 2 is intended to illustrate control of access network/access technology selection for the routing of IP traffic by a User Equipment in a multi-access communication system, according to embodiments of the present invention.

Embodiments of the present invention are based on the idea that the ANDSF should be able to download EPS QoS related ISRP policies on the UE:
∘ The ANDSF ISRP policy rules are upgraded in order for the operator to be able to set in advance ISRP policies associated with EPS QoS (e.g. QCI). Such rules are semi-static i.e. do not need to be changed each time a service (e.g. a voice call) is to start/stop.
∘ When a service is started, the UE is notified of the EPS QoS parameters (e.g. QCI) associated with a service data flow. Such notification is to use session management signalling from the PCRF to the UE via the PCEF.
In an embodiment, the UE is, before the execution of any service, possibly configured by the ANDSF with 2 set of rules
   1. One or more Filter Rules, each one identifying a prioritized list of access technologies / access networks which shall be used by the UE when available to route traffic that matches specific IP filters and/or specific APNs. A filter rule also identifies which radio accesses are restricted for traffic that matches specific IP filters and/or specific APNs (e.g. WLAN is not allowed for traffic to APN-x)
   2. One or more Filter Rules, each one identifying a prioritized list of access technologies / access networks which shall be used by the UE when available to route traffic that matches specific EPS QoS filters and/or specific APNs. A filter rule also identifies which radio accesses are restricted for traffic that matches specific EPS QoS and/or specific APNs (e.g. WLAN is not allowed for traffic to QCI=1).

The second kind of rule corresponds to an embodiment of the present invention, whereas the first kind of rule is already defined in 3GPP.

In an embodiment, when a service is executed on the UE,
1. Either the UE may use RAT selection rules based on the target IP address (e.g. when the IP address of the target server may be known in advance as it belongs to some server farms e.g. belonging to the operator). Then semi-static mapping rules (per 3gpp Rel-10) configured on the UE that map 5-Tuple to Preferred/allowed RAT fulfil the requirement. An example of this is for the UE to be configured with the IP address ranges of the P-CSCF or of the video streaming servers of the operator. These rules may e.g. be sent either by the H-ANDSF (e.g. for video services of the HPLMN) or by the V-ANDSF (e.g. for P-CSCF).
2. Or the UE cannot use RAT selection rules based on the target IP address because the target IP address cannot be known in advance. In that case PCRF "assistance" is required: The PCRF is aware of the application/service related with an IP flow and (based on its rule engine + SPR related data) selects the required EPS QoS for this application/service. In this case the UE is notified of the EPS QoS parameters associated with a service data flow and the EPS QoS related policies downloaded by the ANDSF on the UE are used.

Which kind of rule (per IP flow or per EPS QoS) is to apply is to be based on priorities between ANDSF rules.

Defining such rules does not modify the existing assumptions that the UE may take other (local conditions) inputs for the final decision of which RAT to use to send an actual UL packet waiting for transmission to the network. Such local conditions may e.g. involve the current radio quality of the various accesses the UE is camping on, or the UE battery condition.

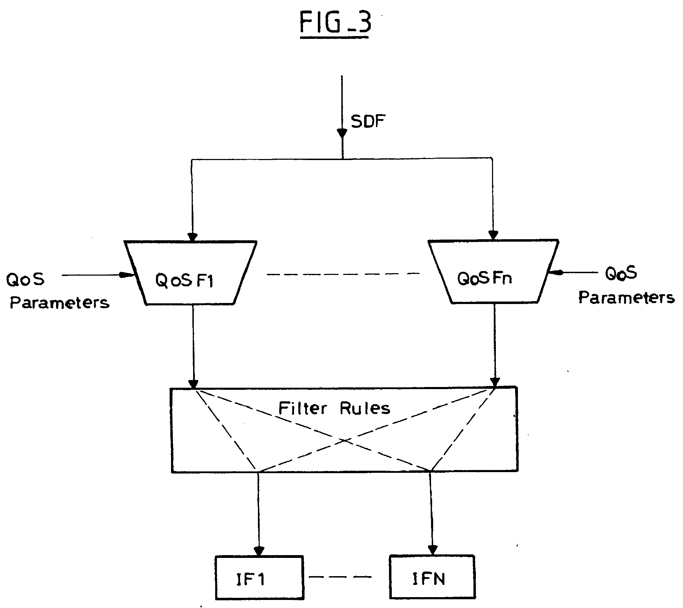

Figure 3 is intended to illustrate schematically the control of access network/access technology selection for the routing of IP traffic by a User Equipment UE based on QoS-based operator's policies according to embodiments of the present invention.

A Service Data Flow SDF generated at application/service level in the UE is applied to QoS filters noted QoSF1 ...QoSFn. The QoS filters also receive QoS parameters associated with this SDF. A QoS filter filters IP traffic matching specific QoS parameter(s) value(s), for example QoSF1 filters traffic having a first value of an associated QoS parameter, QoSF2 filters traffic having a second value of this associated QoS parameter, ...etc. Traffic thus filtered by the QoS filters is then applied to Filter Rules. Filter Rules enable to determine to which one of radio access interfaces, noted IF1...IFN, traffic associated with a given value of this QoS parameter should be routed, according to operator's preferences.

Embodiments are now described, on how to provide the UE with the EPS QoS associated with an IP flow.

Current 23.401 specifies how in case it receives a new policy decision from the PCRF (e.g. induced by a new application/P-CSCF request over Rx), the PCEF (PGW/GGSN) may trigger the "Dedicated bearer activation" procedure: During that procedure the MME (Mobility Management Entity defined in 3gpp 23.401) sends a Session Management Request (e.g. an "Activate dedicated EPS bearer context request") to the UE that includes the Uplink (UL) TFT (Traffic Flow Template = description of the IP flows building a Service Data Flow -SDF) and EPS Bearer QoS parameters.

So the issue of How to provide the UE with the EPS QoS associated with an IP flow, is already settled when this IP flow is established over a 3gpp radio and requests the creation / Modification of a dedicated 3gpp bearer.

The following are potential solutions for the case where the SDF does not require the establishement or modification of a dedicated bearer over 3gpp:
1. Always Notify the mapping from an IP flow to EPS QoS, via signalling sent over a 3gpp (or 3gpp2) radio, i.e. there would be no need to define / standardize dedicated signalling over non 3gpp (or 3gpp2) radio. This would work for the case where the UE has the choice between a 3gpp (or 3gpp2) and a non 3gpp radio.
   It would anyhow require modifications of 3gpp (possibly 3gpp2) signalling to be able to notify the UE with the association of a SDF with a EPS QoS even though this SDF is to be carried over a non 3gpp access i.e. when this SDF does not require the establishment or modification of a dedicated bearer over 3gpp.
   This may be a preferred solution
2. Notify the UE via new signalling over the non 3gpp when the SDF does not require the establishment or modification of a dedicated bearer over 3gpp: This would require
   ∘ When Network Based Mobility Applies
      ∘ Updates to SWu interface between an UE and an ePDG (IKE - Internet Key Exchange, IETF RFC 4306) to be able pass via IKE messages the mapping of IP flows to a EPS QoS
      ∘ new signalling on GTP (GTP based S2b) and on Gxb (not existing) (PMIP based S2b)
   ∘ When Host Based mobility applies
      ▪ Updates to DSMIPv6 (Mobile IPv6 Support for Dual Stack Hosts and Routers per IETF RFC 5555)

Following steps may be provided in figure 2.

Same initial situation as in figure 1.
∘ 0. The UE client fetches the semi-static ISRP policies that contain rules based on the EPS QoS
∘ 1. Same as 1. in the previous call flow
∘ 2. Same as 2. in the previous call flow
∘ 3. Same as 3A. in the previous call flow.
∘ 4. Same as 4A. in the previous call flow when the Service Data Flow requires the establishment /modification of a dedicated bearer over a 3gpp radio (Case α). If the Service Data Flow does not require the establishment /modification of a dedicated bearer over a 3gpp radio (Case β), then a specific notification is to be sent from PGW/GGSN to the UE to notify the UE with the EPS QoS to be associated with the Service Data flow. This notification corresponds to a new signalling procedure to be created over the EPC. A possible implementation of this new signalling may be as follows: An UE notification procedure from PGW/GGSN to UE is defined that consists in
   i. a new GTP-c UE notification message from PGW/GGSN to MME/SGSN possibly via the SGW (to be defined in 3GPP TS 29.274)
   ii. a new NAS (Non Access Stratum) UE notification message from MME or SGSN to the UE (to be defined in 3GPP TS 24.301 and 24.008)
   iii. The notification itself may be carried in a modified PCO (Protocol Configuration Option).
   iv. The SGW, MME, SGSN do not need to understand the information being notified, they just need to relay the information down to the UE
∘ 5. Based on the EPS QoS of the IP flow (received in 4.) and on the ISRP rules (received in 0.), the UE takes appropriate decision on which RAT to choose to support the service flow

This decision may make the UE change of RAT to carry the Service Data Flow (e.g. use 3gpp radio instead of using Wifi). In that case the PCRF is notified per IFOM procedure of this UE decision (notification from UE to PCEF via network procedure defined in 23.261 and IP Flow Mobility rule modification from PCEF to PCRF defined in 3gpp 29.212). When this applies, the PCRF may then need to switch between Case β and Case α.

Making the UE aware of the EPS QoS associated with an IP flow may have other usage.

For example, when, even over Wifi, the UE is made aware of the EPS QoS associated with an IP flow, the UE may trigger Wifi related QoS (e.g. 802.11e) based on the QoS required by the flow.

In one aspect, in an embodiment, there is provided a method for the control of access network/access technology selection for the routing of IP traffic by a User Equipment UE in a multi-access communication system, based on operator's policies, wherein:
- said operator's policies include Quality of Service QoS-based policies, based on IP traffic matching specific QoS filters.

In an embodiment:
- said operator policies include Quality of Service QoS-based policies, based on IP traffic matching specific filters on the Quality of Service provided by a mobile communication system to this IP traffic.

In an embodiment:
- said Quality of Service provided by a mobile communication system has been determined by a Quality of Service Policy server in the mobile communication system.

In an embodiment:
- said QoS-based policies comprise one or more Filter Rules, each one identifying a prioritized list of access technologies/access networks to be used by the UE when available to route traffic that matches specific QoS filters.

In an embodiment:
- said QoS-based policies comprise one or more Filter Rules, each one identifying which access technologies/access networks are restricted for traffic that matches specific QoS filters.

In an embodiment:
- said QoS filters filter IP traffic associated with specific values of at least one QoS parameter.

In an embodiment:
- said QoS filters filter IP traffic associated with specific values of at least one 3gpp mobile network QoS parameter.

In an embodiment:
- said QoS filters filter IP traffic associated with specific values of at least one 3gpp2 mobile network QoS parameter.

In an embodiment:
- said QoS filters filter IP traffic associated with specific values of a QoS parameter corresponding to QoS Class Identifier QCI.

In an embodiment, said method comprises:
- downloading said QoS-based policies to a User Equipment.

In an embodiment, said method comprises:
- a policy server, in particular ANDSF, downloading said QoS-based policies to a User Equipment.

In an embodiment, said method comprises:
- notifying a User Equipment of the QoS associated with a Service Data Flow SDF, at the time of a service execution.

In an embodiment, said method comprises:
- notifying a User Equipment of at least one QoS parameter associated with a Service Data Flow SDF.

In an embodiment:
- QoS parameters include bearer-level QoS parameters associated with Service Data Flow SDF-level QoS parameters.

In an embodiment:
- bearer-level QoS corresponds to 3GPP Evolved Packet System EPS QoS.

In an embodiment:
- QoS parameters include QoS Class Identifier QCI parameter.

In an embodiment, said method comprises:
- a User Equipment selecting an access network/access technology for the routing of IP traffic, based on said QoS-based policies and on the QoS associated with a Service Data Flow carrying said traffic.

In an embodiment, in a system comprising 3GPP and non-3GPP access networks/ access technologies, said method comprises:
- notifying a User Equipment UE of the QoS associated with a Service Data Flow SDF, using signalling exchanged between UE and 3GPP Core Network for establishment or modification of a bearer on which said SDF is mapped.

In an embodiment, said method comprises:
- notifying a User Equipment of the QoS associated with a Service Data Flow SDF, using session management signalling within a dedicated bearer activation or modification procedure between UE and 3GPP Evolved Packet Core EPC.

In another aspect, in an embodiment, there is provided a method for QoS support in a multi-access communication system comprising 3GPP and non-3GPP access networks/access technologies, said method comprising:
- notification of a User Equipment UE that does not require establishment or modification of a bearer over a 3GPP access network/access technology for a Service Data Flow SDF, of the QoS associated with said SDF, assigned by a 3GPP Core Network.

In an embodiment, said method comprises:
- notifying a User Equipment UE of the QoS associated with a Service Data Flow SDF, using dedicated signalling exchanged between UE and 3GPP Core Network over a 3GPP access network/access technology.

In an embodiment, said method comprises:
- a network entity such as PGVV/GGSN sending to a network entity such as MME/SGSN, according to GTP-c protocol, and possibly via a network entity such as SGW, a notification message containing the QoS associated with a Service Data Flow.

In an embodiment, said method comprises:
- a network entity such as MME/SGSN sending to a User Equipment UE, according to NAS protocol, a notification message containing the QoS associated with a Service Data Flow.

In an embodiment:
- said QoS associated with a Service Data Flow is carried within said message in a Protocol Configuration Option PCO.

In an embodiment, said method comprises:
- notifying a User Equipment UE of the QoS associated with a Service Data Flow SDF, using dedicated signalling exchanged between UE and 3GPP Core Network over a non-3GPP access network/access technology.

In an embodiment, in a system supporting host-based IP mobility protocol such as DSMIP, said method comprises:
- a network entity such as PGW having a Home Agent functionality sending said QoS associated with a Service Data Flow to a User Equipment, within said host-based IP mobility protocol.

In an embodiment, in a system supporting network-based IP mobility protocol of PMIP type, said method comprises:
- a network entity such as PGW having a LMA functionality sending said QoS associated with a Service Data Flow to a network entity such as ePDG having a MAG functionality, within said IP mobility protocol.

In an embodiment, in a system supporting network-based IP mobility protocol of GTP type, said method comprises:
- a network entity such as PGW sending said QoS associated with a Service Data Flow to a network entity such as ePDG, within said IP mobility protocol.

In an embodiment, in a system supporting network-based IP mobility protocol, said method comprises:
- a network entity such as ePDG sending said QoS associated with a Service Data Flow to a User Equipment, within Internet Key Exchange IKE protocol.

In an embodiment, said method is provided in a system supporting Quality of Service QoS-based policies based on IP traffic matching specific QoS filters, for the control of access network/access technology selection for the routing of IP traffic by a User Equipment.

In another aspect, there is provided a User Equipment comprising means for performing such method(s).

In one aspect, in an embodiment, there is provided a User Equipment comprising:
- means for selecting an access network/access technology for the routing of IP traffic by said User Equipment in a multi-access communication system, based on operator's policies,
- said operator's policies including Quality of Service QoS-based policies, based on IP traffic matching specific QoS filters.

In an embodiment, said User Equipment comprises:
- means for selecting an access network/access technology for the routing of IP traffic, based on said QoS-based policies and on the QoS associated with a Service Data Flow carrying said traffic.

In an embodiment, said User Equipment comprises:
- means for receiving said QoS-based policies from a policy server.

In an embodiment, said User Equipment comprises:
- means for receiving notification of the QoS associated with a Service Data Flow SDF.

In an embodiment, in a system comprising 3GPP and non-3GPP access networks/ access technologies, said User Equipment comprises:
- means for receiving said notification via signalling exchanged between UE and 3GPP Core Network for establishment or modification of a bearer on which said SDF is mapped.

In an embodiment, said User Equipment comprises:
- means for receiving said notification, via session management signalling within a dedicated bearer activation or modification procedure between UE and 3GPP Evolved Packet Core EPC.

In another aspect, in an embodiment, there is provided a User Equipment UE, in a multi-access communication system comprising 3GPP and non-3GPP access networks/access technologies, said UE comprising:
- means for receiving notification of the QoS associated with a Service Data Flow SDF, assigned by a 3GPP Core Network, if said UE does not require establishment or modification of a bearer over a 3GPP access network/access technology for said SDF.

In an embodiment, said User Equipment comprises:
- means for receiving notification of the QoS associated with a Service Data Flow SDF, using dedicated signalling exchanged between UE and 3GPP Core Network over a 3GPP access network/access technology.

In an embodiment, said User Equipment comprises:
- means for receiving, according to NAS protocol, a notification message containing the QoS associated with a Service Data Flow.

In an embodiment:
- said QoS associated with a Service Data Flow is carried within said message in a Protocol Configuration Option PCO.

In an embodiment, said User Equipment comprises:
- means for receiving notification of the QoS associated with a Service Data Flow SDF, using dedicated signalling exchanged between UE and 3GPP Core Network over a non-3GPP access network/access technology.

In an embodiment, in a system supporting host-based IP mobility protocol such as DSMIP, said UE comprises:
- means for receiving said QoS associated with a Service Data Flow from a network entity such as PGW having a Home Agent functionality, within said host-based IP mobility protocol.

In an embodiment, in a system supporting network-based IP mobility protocol, said UE comprises:
- means for receiving said QoS associated with a Service Data Flow from a network entity such as ePDG, within Internet Key Exchange IKE protocol.

In an embodiment, in a system supporting Quality of Service QoS-based policies based on IP traffic matching specific QoS filters, for the control of access network/access technology selection for the routing of IP traffic by a User Equipment, said UE comprises:
- means for selecting an access network/access technology, based on said QoS-based policies and on said notified QoS.

In an embodiment, said User Equipment comprises:
- means for triggering non-3GPP access network/access technology related QoS, upon reception of said notification.

In another aspect, there is provided a network entity such as policy server, comprising means for performing such method(s).

In an embodiment, there is provided a network entity such as policy server in a multi-access communication system, said network entity comprising:
- means for providing operator's policies to a User Equipment for the control of access network/access technology selection for the routing of IP traffic by said User Equipment,
- said operator's policies including Quality of Service QoS-based policies, based on IP traffic matching specific QoS filters.

In another aspect, there is provided a network entity in charge of signalling, comprising means for performing such method(s).

In one aspect, in an embodiment, there is provided a network entity in charge of signalling in a multi-access communication system comprising 3GPP and non-3GPP access networks/ access technologies, said network entity comprising:
- means for notifying a User Equipment UE of the QoS associated with the SDF, using dedicated signalling exchanged between UE and 3GPP Core Network over a 3GPP access network/access technology.

In an embodiment, there is provided a network entity, such as a network entity corresponding to PGW/GGSN, comprising:
- means for sending to a network entity corresponding to MME/SGSN, according to GTP-c protocol, and possibly via a network entity such as SGW, a notification message containing the QoS associated with a Service Data Flow.

In an embodiment, there is provided a network entity, such as a network entity corresponding to MME/SGSN, comprising:
- means for sending to a User Equipment UE, according to NAS protocol, a notification message containing the QoS associated with a Service Data Flow.

In an embodiment:
- said QoS associated with a Service Data Flow is carried within said message in a Protocol Configuration Option PCO.

In another aspect, in an embodiment, there is provided a network entity in charge of signalling in a multi-access communication system comprising 3GPP and non-3GPP access networks/ access technologies, said network entity comprising:
- means for notifying a User Equipment UE of the QoS associated with a Service Data Flow SDF, using dedicated signaling exchanged between UE and 3GPP Core Network over a non-3GPP access network/access technology.

In an embodiment, in a system supporting host-based IP mobility protocol such as DSMIP, there is provided a network entity corresponding to an entity such as PGW having a Home Agent functionality, comprising:
- means for sending said QoS associated with a Service Data Flow to a User Equipment, within said host-based IP mobility protocol.

In an embodiment, in a system supporting network-based IP mobility protocol of PMIP type, there is provided a network entity corresponding to an entity such as PGW having a LMA functionality, said network entity comprising:
- means for sending said QoS associated with a Service Data Flow to a network entity such as ePDG having a MAG functionality, within said IP mobility protocol.

In an embodiment, in a system supporting network-based IP mobility protocol of GTP type, there is provided a network entity corresponding to an entity such as PGW, said network entity comprising:
- means for sending said QoS associated with a Service Data Flow to a network entity such as ePDG, within said IP mobility protocol.

In an embodiment, in a system supporting network-based IP mobility protocol, there is provided a network entity corresponding to an entity such as ePDG, comprising:
- means for sending said QoS associated with a Service Data Flow to a User Equipment, within Internet Key Exchange IKE protocol.

In an embodiment, such network entity or entities are provided in a system supporting Quality of Service QoS-based policies based on IP traffic matching specific QoS filters, for the control of access network/access technology selection for the routing of IP traffic by a User Equipment.

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performer by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for the control of access network/access technology selection for the routing of IP traffic by a User Equipment UE (UE) in a multi-access Evolved Packet System EPS communication system, based on operator's policies, a method wherein:
- said operator's policies include EPS Quality of Service QoS-based policies, based on IP traffic matching specific EPS QoS filters (QoSF1, ...QoSFn), EPS QoS filters filtering IP traffic associated with specific values of at least one EPS QoS parameter, the Quality of Service EPS QoS being provided by said EPS system to said IP traffic and determined by a Policy and Charging Rules Function PCRF, said method comprising:
- if said User Equipment cannot use Radio Access Technologies selection rules based on the target IP address of said IP traffic, said User Equipment selecting an access network/access technology for the routing of IP traffic, based on said EPS QoS-based policies, and on the EPS QoS associated with a Service Data Flow carrying said traffic, notified to said User Equipment when a service is started.

2. A method according to claim 1 , wherein:
- said EPS QoS-based policies comprise one or more Filter Rules (Filter Rules), each one identifying a prioritized list of access technologies/access networks to be used by the UE when available to route traffic that matches specific EPS QoS filters.

3. A method according to any of claims 1 or 2, wherein:
- said EPS QoS-based policies comprise one or more Filter Rules, each one identifying which access technologies/access networks are restricted for traffic that matches specific EPS QoS filters.

4. A method according to any of claims 1 to 3, comprising:
- downloading said EPS QoS-based policies to a User Equipment.

5. A method according to any of claims 1 to 4, comprising:
- a policy server, in particular ANDSF (ANDSF), downloading said EPS QoS-based policies to a User Equipment.

6. A method according to any of claims 1 to 5, comprising:
- notifying a User Equipment of the EPS QoS associated with a Service Data Flow SDF, when a service is started.

7. A method according to any of claims 1 to 6, in a EPS system comprising 3GPP and non-3GPP access networks/ access technologies (3gpp RAN, Non 3gpp RAN, e.g. Wifi), said method comprising:
- notifying a User Equipment UE of the EPS QoS associated with a Service Data Flow SDF, using signalling exchanged between UE and 3GPP Core Network for establishment or modification of a bearer on which said SDF is mapped.

8. A method according to any of claims 1 to 7, in a EPS system comprising 3GPP and non-3GPP access networks/ access technologies (3gpp RAN, Non 3gpp RAN, e.g. Wifi), said method comprising:
- notification of a User Equipment UE, of the QoS associated with a Service Data Flow SDF to be carried over a non-3GPP access, assigned by a 3GPP Core Network.

9. A method according to claim 8, comprising:
- notifying a User Equipment UE of the EPS QoS associated with a Service Data Flow SDF, using dedicated signalling exchanged between UE and 3GPP Core Network over a 3GPP access network/access technology.

10. A method according to claim 8, comprising:
- notifying a User Equipment UE of the EPS QoS associated with a Service Data Flow SDF, using dedicated signalling exchanged between UE and 3GPP Core Network over a non-3GPP access network/access technology.

11. A User Equipment (UE), comprising - means for selecting an access network/access technology for the routing of IP traffic by said User Equipment in a multi-access Evolved Packet System EPS communication system, based on operator's policies,
said operator's policies including EPS Quality of Service QoS-based policies based on IP traffic matching specific QoS filters , EPS QoS filters filtering IP traffic associated with specific values of at least one EPS QoS parameter, the Quality of Service EPS QoS being provided by said EPS system to said IP traffic and determined by a Policy and Charging Rules Function PCRF, said User Equipment comprising:
- means for, if said User Equipment cannot use Radio Access Technologies selection rules based on the target IP address of said IP traffic, selecting an access network/access technology for the routing of IP traffic, based on said EPS QoS-based policies, and on the EPS QoS associated with a Service Data Flow SDF carrying said IP traffic, notified to said User Equipment when a service is started.

12. A User Equipment according to claim 11, comprising:
- means for receiving said QoS-based policies from a policy server.

13. A User Equipment according to claim 1 or 12, comprising, in a system comprising 3GPP and non-3GPP access networks/ access technologies:
- means for receiving said notification via signalling exchanged between UE and 3GPP Core Network for establishment or modification of a bearer on which said SDF is mapped.

14. A User Equipment according to any of claims 11 to 13, comprising, in a system comprising 3GPP and non-3GPP access networks/ access technologies:
- means for receiving notification of the QoS associated with a Service Data Flow SDF to be carried over a non-3GPP access, assigned by a 3GPP Core Network, using dedicated signalling exchanged between UE and 3GPP Core Network over a 3GPP access network/access technology.

15. A User Equipment according to any of claims 11 to 13, comprising, in a system comprising 3GPP and non-3GPP access networks/ access technologies:
- means for receiving notification of the QoS associated with a Service Data Flow SDF to be carried over a non-3GPP access, assigned by a 3GPP Core Network, using dedicated signalling exchanged between UE and 3GPP Core Network over a non 3GPP access network/access technology.

## Patentansprüche

1. Verfahren für die Steuerung der Auswahl von Zugangsnetz/Zugangstechnologie für das Routing von IP-Verkehr durch ein Benutzergerät (UE) in einem EPS-Kommunikationssystem auf der Grundlage der Richtlinien des Betreibers, wobei für das Verfahren gilt:
- dass besagte Richtlinien des Betreibers Richtlinien für die EPS-Dienstgüte (QoS) umfassen, die auf IP-Verkehr basieren, die sich mit spezifischen EPS-QoS-Filtern (QoSF1, ...QoSFn) decken, wobei die EPS-QoS-Filter IP-Verkehr filtern, der bestimmten Werten von mindestens einem EPS-QoS-Parameter zugeordnet ist, wobei die EPS-QoS besagtem IP-Verkehr durch besagtes EPS-System bereitgestellt und durch eine Policy and Charging Rules Function (PCRF) vorgegeben wird, wobei besagtes Verfahren umfasst:
- dass in dem Fall, dass besagtes Benutzergerät keine Auswahlregeln für Funkzugangstechnologien auf der Grundlage der Ziel-IP-Adresse besagten IP-Verkehrs benutzen kann, besagtes Benutzergerät ein Zugangsnetz/eine Zugangstechnologie für das Routen von IP-Verkehr auswählt, und zwar auf der Grundlage der besagten, EPS-QoS-basierten Richtlinien sowie auf der Grundlage der EPS-QoS, die einem Service Data Flow zugeordnet ist, der besagten Verkehr trägt und besagtem Benutzergerät mitgeteilt wird, wenn die Leistung eines Dienstes eingeleitet wird.

2. Verfahren nach Anspruch 1, wobei:
- besagte EPS-QoS-basierte Richtlinien eine oder mehrere Filterregeln (Filterregeln) umfassen, jede von ihnen eine priorisierte Liste von Zugangstechnologien/Zugangsnetzwerken identifizierend, die, falls verfügbar, von dem UE zum Routen von Verkehr zu verwenden sind, der mit spezifischen EPS-QoS-Filtern übereinstimmt.

3. Verfahren nach einem beliebigen der Ansprüche 1 bis 2, wobei:
- besagte EPS-QoS-basierte Richtlinien eine oder mehrere Filterregeln umfassen, jede von ihnen identifizierend, welche Zugangstechnologien/Zugangsnetzwerke gesperrt sind für Verkehr, der mit spezifischen EPS-QoS-Filtern übereinstimmt.

4. Verfahren nach einem beliebigen der Ansprüche 1 bis 3, umfassend:
- das Herunterladen besagter EPS-QoS-basierter Richtlinien auf ein Benutzergerät.

5. Verfahren nach einem beliebigen der Ansprüche 1 bis 4, umfassend:
- einen Richtlinienserver, konkret einen ANDSF-Server (ANDSF), der besagte EPS-QoS-basierte Richtlinien auf ein Benutzergerät herunterlädt.

6. Verfahren nach einem beliebigen der Ansprüche 1 bis 5, umfassend:
- das Melden der einem Dienstdatenfluss (SDF) zugeordneten EPS-QoS an ein Benutzergerät, wenn ein Dienst gestartet wird.

7. Verfahren nach einem jeglichen der Ansprüche 1 bis 6 für ein EPS-System, welches 3GPP-basierte und nicht-3GPP-basierte Zugangsnetzwerke/Zugangstechnologien (3gpp RAN, Non 3gpp RAN, z. B. WLAN) umfasst, wobei besagtes Verfahren umfasst:
- das Melden der einem Dienstdatenfluss (SDF) zugeordneten EPS-QoS an ein Benutzergerät (UE) unter Verwendung der Signalisierung, die zwischen dem UE und dem 3GPP-Kernnetzwerk für die Herstellung oder das Modifizieren eines Trägers ausgetauscht wurde, auf welchem besagter SDF abgebildet wird.

8. Verfahren nach einem beliebigen der Ansprüche 1 bis 7 für ein EPS-System, welches 3GPP-basierte und nicht-3GPP-basierte Zugangsnetzwerke/Zugangstechnologien (3gpp RAN, Non 3gpp RAN, z. B. WLAN) umfasst, wobei besagtes Verfahren umfasst:
- das Melden durch ein Benutzergerät (UE) der QoS, die einem Dienstdatenfluss (SDF) zugeordnet ist, der über einen nicht-3GPP-Zugang abzuwickeln ist, der von einem 3GPP-Kernnetzwerk zugewiesen wird.

9. Verfahren nach Anspruch 8, umfassend:
- das Melden der einem Dienstdatenfluss (SDF) zugeordneten EPS-QoS an ein Benutzergerät (UE) unter Verwendung der dedizierten Signalisierung, die zwischen dem UE und dem 3GPP-Kernnetzwerk über ein/e 3GPP-basierte/s Zugangsnetzwerk/Zugangstechnologie ausgetauscht wurde.

10. Verfahren nach Anspruch 8, umfassend:
- das Melden der einem Dienstdatenfluss (SDF) zugeordneten EPS-QoS an ein Benutzergerät (UE) unter Verwendung der dedizierten Signalisierung, die zwischen dem UE und dem 3GPP-Kernnetzwerk über ein/e nicht-3GPP-basierte/s Zugangsnetzwerk/Zugangstechnologie ausgetauscht wurde.

11. Benutzergerät (UE), umfassend:
Mittel für die Auswahl von Zugangsnetz/Zugangstechnologie für das Routing von IP-Verkehr durch besagtes Benutzergerät (UE) in einem EPS-Kommunikationssystem auf der Grundlage der Richtlinien des Betreibers,
- wobei besagte Richtlinien des Betreibers Richtlinien für die EPS-Dienstgüte (QoS) umfassen, die auf IP-Verkehr basieren, die sich mit spezifischen QoS-Filtern decken, wobei die EPS-QoS-Filter IP-Verkehr filtern, der bestimmten Werten von mindestens einem EPS-QoS-Parameter zugeordnet ist, wobei die EPS-QoS besagtem IP-Verkehr durch besagtes EPS-System bereitgestellt und durch eine Policy and Charging Rules Function (PCRF) vorgegeben wird, wobei besagtes Benutzergerät umfasst:
- Mittel, um in dem Fall, dass besagtes Benutzergerät keine Auswahlregeln für Funkzugangstechnologien auf der Grundlage der Ziel-IP-Adresse besagten IP-Verkehrs benutzen kann, ein Zugangsnetz/eine Zugangstechnologie für das Routen von IP-Verkehr auszuwählen, und zwar auf der Grundlage der besagten, EPS-QoS-basierten Richtlinien sowie auf der Grundlage der EPS-QoS, die einem Service Data Flow (SDF) zugeordnet ist, der besagten IP-Verkehr trägt und besagtem Benutzergerät mitgeteilt wird, wenn die Leistung eines Dienstes eingeleitet wird.

12. Benutzergerät nach Anspruch 11, umfassend:
- Mittel für den Empfang besagter QoS-basierter Richtlinien von einem Richtlinienserver.

13. Benutzergerät nach Anspruch 11 oder 12, in einem System, welches 3GPP-basierte und nicht-3GPP-basierte Zugangsnetzwerke/Zugangstechnologien umfasst, Folgendes umfassend:
- Mittel für den Empfang besagter Meldung über die zwischen dem UE und dem 3GPP-Kernnetzwerk ausgetauschte Signalisierung zur Einrichtung oder Modifizierung eines Trägers, auf dem besagter SDF abgebildet wird.

14. Benutzergerät nach einem jeglichen der Ansprüche 11 bis 13, in einem System, welches 3GPP-basierte und nicht-3GPP-basierte Zugangsnetzwerke/Zugangstechnologien umfasst, Folgendes umfassend:
- Mittel für den Empfang der einem Dienstdatenfluss (SDF) zugeordneten QoS zwecks Abwicklung über einen nicht-3GPP-basierten, von einem 3GPP-Kernnetzwerk zugewiesenen Zugang unter Verwendung der dedizierten Signalisierung, die zwischen dem UE und dem 3GPP-Kernnetzwerk über ein/e 3GPP-basierte/s Zugangsnetzwerk/Zugangstechnologie ausgetauscht wurde.

15. Benutzergerät nach einem jeglichen der Ansprüche 11 bis 13, in einem System, welches 3GPP-basierte und nicht-3GPP-basierte Zugangsnetzwerke/Zugangstechnologien umfasst, Folgendes umfassend:
- Mittel für den Empfang der einem Dienstdatenfluss (SDF) zugeordneten QoS zwecks Abwicklung über einen nicht-3GPP-basierten, von einem 3GPP-Kernnetzwerk zugewiesenen Zugang unter Verwendung der dedizierten Signalisierung, die zwischen dem UE und dem 3GPP-Kernnetzwerk über ein/e nicht-3GPP-basierte/s Zugangsnetzwerk/Zugangstechnologie ausgetauscht wurde.

## Revendications

1. Procédé de commande de sélection de réseau d'accès/technologie d'accès pour le routage de trafic IP par un équipement utilisateur UE (UE) dans un système de communication de système par paquets évolué EPS à accès multiples, sur la base de politiques de l'opérateur, un procédé dans lequel :
- lesdites politiques de l'opérateur comprennent des politiques de qualité de service (QoS) EPS, basées sur un trafic IP conforme à des filtres QoS EPS spécifiques (QoSF1, ...QoSFn), les filtres QoS EPS filtrant le trafic IP associé à des valeurs spécifiques d'au moins un paramètre QoS EPS, la qualité de service (QoS) EPS étant fournie par ledit système EPS audit trafic IP et déterminée par une fonction de règles de politique et de facturation PCRF, ledit procédé comprenant l'étape suivante :
- si ledit équipement utilisateur ne peut pas utiliser des règles de sélection de technologies d'accès radio sur la base de l'adresse IP cible dudit trafic IP, ledit équipement utilisateur sélectionne un réseau d'accès/une technologie d'accès pour le routage du trafic IP, sur la base desdites politiques de QoS EPS, et de la QoS EPS associée à un flux de données de service transportant ledit trafic, notifiée audit équipement utilisateur lorsqu'un service est lancé.

2. Procédé selon la revendication 1, dans lequel :
- lesdites politiques de QoS EPS comprennent une ou plusieurs règles de filtrage (règles de filtrage), chacune identifiant une liste classée par ordre de priorité de technologies d'accès/réseaux d'accès devant être utilisés par l'UE, si disponibles, pour router le trafic conforme à des filtres QoS EPS spécifiques.

3. Procédé selon l'une quelconque des revendications 1 et 2, dans lequel :
- lesdites politiques de QoS EPS comprennent une ou plusieurs règles de filtrage, chacune identifiant quels technologies d'accès/réseaux d'accès sont restreintes pour le trafic conforme à des filtres QoS EPS spécifiques.

4. Procédé selon l'une quelconque des revendications 1 à 3, comprenant l'étape suivante :
- télécharger lesdites politiques de QoS EPS dans un équipement utilisateur.

5. Procédé selon l'une quelconque des revendications 1 à 4, comprenant l'étape suivante :
- un serveur de politiques, en particulier ANDSF (ANDSF), télécharge lesdites politiques de QoS EPS dans un équipement utilisateur.

6. Procédé selon l'une quelconque des revendications 1 à 5, comprenant l'étape suivante :
- notifier à un équipement utilisateur la QoS EPS associée à un flux de données de Service SDF, lorsqu'un service est lancé.

7. Procédé selon l'une quelconque des revendications 1 à 6, dans un système EPS comprenant des réseaux d'accès/technologies d'accès 3GPP et non 3GPP (RAN 3gpp, non RAN 3gpp, par exemple, Wifi), ledit procédé comprenant l'étape suivante :
- notifier à un équipement utilisateur UE la QoS EPS associée à un flux de données de service SDF, en utilisant une signalisation échangée entre l'UE et le coeur de réseau 3GPP pour l'établissement ou la modification d'un support avec lequel ledit SDF est mis en correspondance.

8. Procédé selon l'une quelconque des revendications 1 à 7, dans un système EPS comprenant des réseaux d'accès/technologies d'accès 3GPP et non 3GPP (RAN 3gpp, non RAN 3gpp, par exemple, Wifi), ledit procédé comprenant l'étape suivante :
- la notification à un équipement utilisateur UE, de la QoS associée à un flux de données de service devant être transporté sur un accès non 3GPP, attribuée par un coeur de réseau 3GPP.

9. Procédé selon la revendication 8, comprenant l'étape suivante :
- notifier à un équipement utilisateur UE la QoS EPS associée à un flux de données de service, en utilisant une signalisation dédiée échangée entre l'UE et le coeur de réseau 3GPP sur un réseau d'accès/technologie d'accès 3GPP.

10. Procédé selon la revendication 8, comprenant l'étape suivante :
- notifier à un équipement utilisateur UE la QoS EPS associée à un flux de données de service SDF, en utilisant une signalisation dédiée échangée entre l'UE et le coeur de réseau 3GPP sur un réseau d'accès/technologie d'accès non 3GPP.

11. Équipement utilisateur (UE), comprenant
- des moyens pour sélectionner un réseau d'accès/technologie d'accès pour le routage de trafic IP par ledit équipement utilisateur dans un système de communication de système de paquet évolué EPS à accès multiples, sur la base de politiques de l'opérateur,
- lesdites politiques de l'opérateur comprenant des politiques de qualité de service (QoS) EPS, basées sur un trafic IP conforme à des filtres QoS spécifiques, les filtres QoS EPS filtrant le trafic IP associé à des valeurs spécifiques d'au moins un paramètre QoS EPS, la qualité de service (QoS) EPS étant fournie par ledit système EPS audit trafic IP et déterminée par une fonction de règles de politique et de facturation PCRF, ledit équipement utilisateur comprenant :
- des moyens pour, si ledit équipement utilisateur ne peut pas utiliser des règles de sélection de technologies d'accès radio sur la base de l'adresse IP cible dudit trafic IP, sélectionner un réseau d'accès/une technologie d'accès pour le routage du trafic IP, sur la base desdites politiques de QoS EPS, et de la QoS EPS associée à un flux de données de service SDF transportant ledit trafic IP, notifiée audit équipement utilisateur lorsqu'un service est lancé.

12. Équipement utilisateur selon la revendication 11, comprenant :
- des moyens pour recevoir lesdites politiques de QoS à partir d'un serveur de politiques.

13. Équipement utilisateur selon la revendication 11 ou 12, comprenant, dans un système comprenant des réseaux d'accès/technologies d'accès 3GPP et non 3GPP :
- des moyens pour recevoir ladite notification par l'intermédiaire d'une signalisation échangée entre l'UE et le coeur de réseau 3GPP pour l'établissement ou la modification d'un support avec lequel ledit SDF est mis en correspondance.

14. Équipement utilisateur selon l'une quelconque des revendications 11 à 13, comprenant, dans un système comprenant des réseaux d'accès/technologies d'accès 3GPP et non 3GPP :
- des moyens pour recevoir une notification de la QoS associée à un flux de données de service SDF devant être transporté sur un accès non 3GPP, attribuée par un coeur de réseau 3GPP, en utilisant une signalisation dédiée échangée entre l'UE et le coeur de réseau 3GPP sur un réseau d'accès/une technologie d'accès 3GPP.

15. Équipement utilisateur selon l'une quelconque des revendications 11 à 13, comprenant, dans un système comprenant des réseaux d'accès/technologies d'accès 3GPP et non 3GPP :
- des moyens pour recevoir une notification de la QoS associée à un flux de données de service SDF devant être transporté sur un accès non 3GPP, attribué par un coeur de réseau 3GPP, en utilisant une signalisation dédiée échangée entre l'UE et le coeur de réseau 3GPP sur un réseau d'accès/une technologie d'accès non 3GPP.
